# FASCICULE DE BREVET EUROPEEN

(11) **EP 1 375 233 B1**
(45) Date de publication et mention de la délivrance du brevet: **26.10.2005**
(21) Numéro de dépôt: 03350003.4
(22) Date de dépôt: 23.06.2003
(51) Int. Cl.: B60K 26/02, G05G 1/14, F02D 11/10, F02D 11/02, B60K 31/18

(54) **Pédale d'accélérateur à contrôle de force de rappel intégré**
Gaspedal mit integrierter Rückstellkraftkontrolle
Accelerator pedal with integrated return force control

(30) Priorité: 26.06.2002 FR 0207960
(43) Date de publication de la demande: 02.01.2004
(73) Titulaire: LANDERRETCHE, Alain, F-44100 Nantes (FR)
(72) Inventeur: LANDERRETCHE, Alain, F-44100 Nantes (FR)

(56) Documents cités:
- EP-A- 0 617 674
- EP-A- 0 962 350
- WO-A-00/56566
- DE-A- 2 723 562
- DE-A- 19 620 929

## Description

### Domaine technique

L'efficacité et l'ergonomie de certaines applications d'assistance au contrôle longitudinal des véhicules automobiles, peuvent être grandement améliorées par une pédale d'accélérateur haptique. Ce principe, connu en soi, consiste à contrôler la force de rappel de la pédale au moyen d'un actionneur, en fonction d'une grandeur de commande caractéristique : vitesse, accélération, distance inter véhicule etc. Plus simplement, la possibilité d'un ajustement personnalisé de la force de rappel de la pédale peut être utilisée pour l'amélioration du confort de conduite.
La présente invention ne concerne pas le principe haptique en lui même qui est connu par différents brevets. Elle propose une amélioration du dispositif du brevet EP0617674, selon lequel le préambule de la revendication 1 a été délimité, par la conception d'une pédale d'accélérateur dans laquelle un actionneur intégré au mécanisme de la pédale peut contrôler la force de rappel sans modifier la pente et l'hystérésis de la caractéristique force/déplacement initiale.

### Etat de l'art

Dans la description qui suit, on utilisera aussi bien les termes force de rappel que couple de rappel de la pédale, dont la relation est évidente pour l'homme de l'art.
Jusqu'à une date récente, les pédales d'accélérateur étaient reliées mécaniquement à l'organe de contrôle du moteur, papillon d'air ou pompe à injection, lequel comportait les ressorts de rappel qui déterminent la caractéristique force/déplacement de la pédale. Les brevets de systèmes haptiques mettaient en oeuvre un actionneur additionnel connecté à la liaison mécanique entre la pédale et le moteur, solution qui n'est pas applicable aux pédales dites électroniques ou encore "drive by wire" des voitures récentes. De plus et surtout, les principes et les moyens d'action présentaient des problèmes de comportement incompatibles avec l'ergonomie de la fonction d'assistance, les attentes de confort, voire même la sécurité de la conduite.

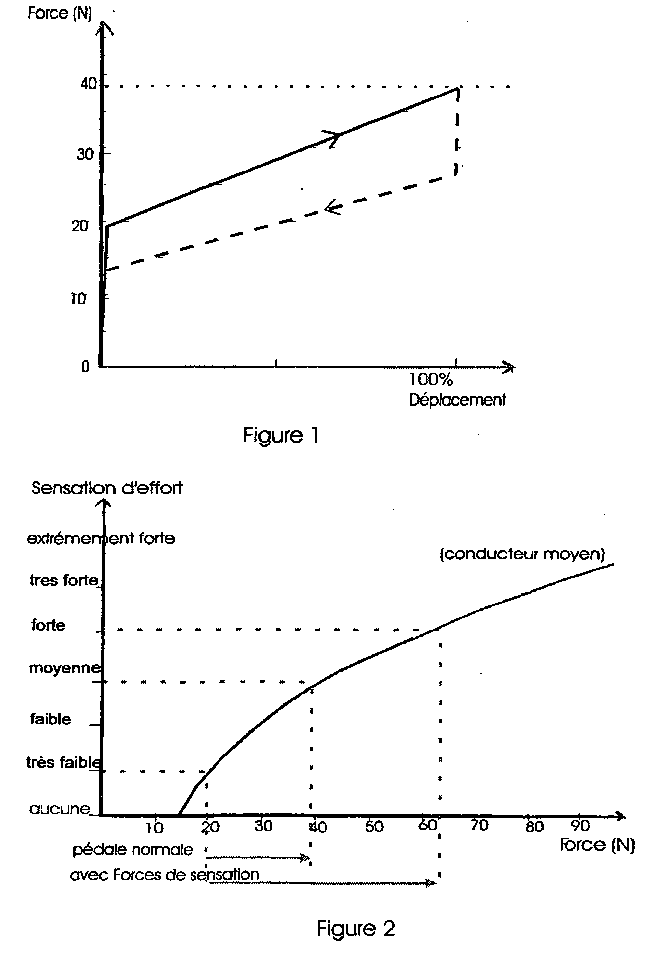

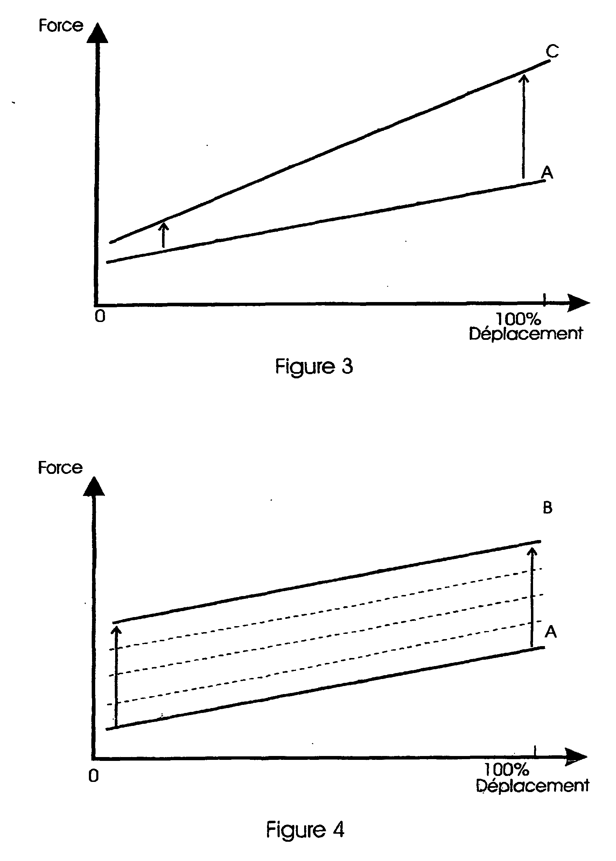

La majorité des pédales d'accélérateurs qui équipent les véhicules automobiles présente une caractéristique effortlcourse illustrée figure 1, avec pour ordres de grandeurs une force de rappel de 20N quand la pédale est en position haute et de 30 à 40N en position basse.
La figure 2 illustre l'allure générale d'une relation connue (loi de Stevens) entre l'effort à la pédale et la sensation perçue par le conducteur. Cette loi montre dans la première partie de la courbe une grande sensibilité du conducteur aux modifications de la force de rappel, puis une saturation de la perception et un effort inacceptable pour la fonction accélérateur.
Le système actionneur qui contrôle la force de rappel d'une pédale haptique doit donc pouvoir générer une force d'intensité suffisante pour être efficace dès l'origine du déplacement de la pédale (en position haute) et en tout point de la course, sans pour autant que la force de rappel globale appliquée au pied du conducteur atteigne la limite d'acceptabilité quand la pédale est enfoncée. Outre des considérations d'ergonomie et de confort, cette condition répond aussi à la volonté de laisser au conducteur la liberté d'outrepasser consciemment la force de rappel, sans que l'effort supplémentaire nécessite de modifier la position naturelle du pied sur la pédale.
Des expérimentations d'un système haptique d'aide à la conduite ont montré que les meilleurs résultats sont atteints quand le contrôle de la force de rappel n'a pas ou peu d'influence sur la pente de la caractéristique initiale de la pédale, celle qui résulte de l'action des ressorts de rappel en l'absence du contrôle d'une force additionnelle par l'actionneur. Cette condition est réalisée quand l'actionneur a la capacité d'accroître la force de rappel proportionnellement à la grandeur de commande, sans influence de la position de la pédale, de la même façon que le ferait l'addition d'une force constante. Comme représenté figure 4, le contrôle de la force se traduit alors par une translation parallèle de la caractéristique initiale (A) de la pédale avec force additionnelle nulle, vers la caractéristique (B) avec un réglage de force additionnelle, sans modification de la pente et en particulier sans accroissement de celle ci. Lorsque le conducteur déplace la pédale, il perçoit ainsi toujours le même gradient de force et la même sensation d'élasticité, ce qui le rend plus réceptif aux informations haptiques
Cette caractéristique doit également se vérifier en régime dynamique, lorsque le conducteur impose à la pédale des déplacements qui peuvent être très rapides : pour un réglage de force donné, les déplacements de la pédale ne doivent pas induire de discontinuité ou de transitions dans la force de rappel. Beaucoup de systèmes antérieurs ne répondent pas à cette condition.

Les moyens de contrôle de force utilisés dans d'autres domaines, moteurs couple ou vérins asservis, ne sont pas adaptés à l'équipement d'une pédale d'accélérateur, pour des raisons de masse, d'énergie, de coût et de comportement. Ils peuvent en particulier remettre en cause la sécurité de la fonction.
Des systèmes de "durcissement" de pédale ont donc été réalisés sur la base d'un mécanisme qui met ou non en service un ressort additionnel, comme on peut le voir dans les brevets DE2723562 et WO 00156566. Ces systèmes et les réalisations apparentées produisent un fort accroissement de la pente de la pédale et une brusque discontinuité de la force de rappel à la mise en action du ressort. Le brevet DE 196 20 929 montre comment la force de rappel peut être augmentée par un ressort additionnel réglable connecté à la liaison mécanique entre la pédale et le moteur du véhicule. Son action est illustrée par la figure 3 dudit brevet où l'on remarque que le système de réglage augmente la force de rappel mais aussi simultanément et dans une forte proportion la pente d'origine. La même caractéristique est illustrée dans le brevet EP0962350 qui fait application d'une telle pédale. La divergence entre la courbe de la force de rappel initiale et la courbe avec force de rappel additionnelle montre que le ressort additionnel est inactif en position de force additionnelle nulle et que l'accroissement de la pente résulte de l'apport de la constante du ressort de réglage lorsqu'il est mis en service. La figure 3, similaire à celles desdits brevets, illustre ce fonctionnement dans lequel le passage de la caractéristique initiale (A), vers la caractéristique (C) avec force de rappel additionnelle, se fait avec un fort accroissement de la pente. Il a pour conséquence un durcissement anormal de la pédale en fin de course et une mauvaise ergonomie du principe haptique, pour lequel la force de rappel ressentie par le conducteur doit être en tout point de la course clairement représentative de la grandeur de réglage et non de la position de la pédale.
L'usage d'un ressort additionnel à faible constante pourrait atténuer ce défaut, mais les résultats sont imparfaits et cette solution impose un encombrement important, une course de réglage de grande amplitude et en conséquence une puissance trop élevée du moteur de réglage.
Le brevet EP0617674 propose une solution performante, avec un dispositif additionnel spécifique dont l'action permet de contrôler la force de rappel sans influencer la pente de la caractéristique initiale de la pédale. Le dispositif de ce brevet peut toutefois être d'un encombrement excessif pour l'implantation de certaines pédales.

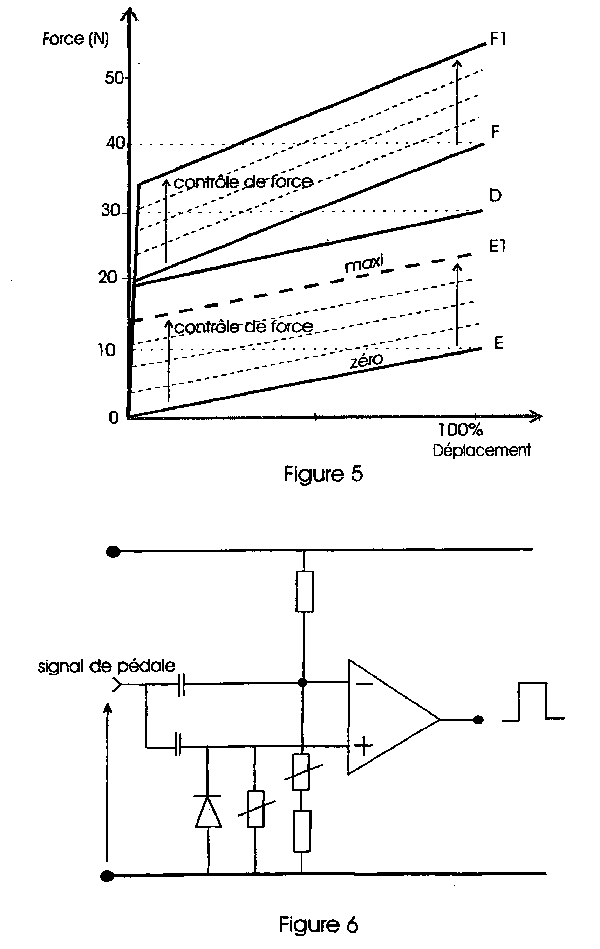

La solution de la présente invention consiste en ce qu'un actionneur de réglage commandé par une unité électronique peut déplacer proportionnellement à une grandeur de commande le point d'ancrage de un ou plusieurs ressorts de rappel de la pédale, le/lesdit(s) ressort(s) concourant en permanence et sans discontinuité à la caractéristique initiale de la pédale sur toute la course de celle ci. La grandeur de commande est un signal issu du logiciel de l'application.
En intégrant le ressort de réglage aux ressorts de rappel initiaux, la somme des constantes des ressorts et donc la pente de la caractéristique sont identiques en toutes circonstances. L'accroissement de la force est proportionnel au déplacement du point d'ancrage du ressort de réglage et le système est capable selon ce principe de régler une force additionnelle nulle en tout point de la course, dans la mesure où la caractéristique initiale dudit ressort est incluse dans la caractéristique initiale de la pédale. A chaque position du point d'ancrage du ou des ressorts de réglage correspond une force et un couple de rappel additionnel constants sur toute la course de la pédale. La figure 5 montre l'addition des caractéristiques de plusieurs ressorts de pédale, avec des valeurs d'exemple non limitatives. La droite (F) est la caractéristique initiale standard de la pédale en l'absence de force additionnelle (de 20 à 40N). Elle résulte de la sommation de la caractéristique (D) d'un ressort de rappel de base (de 20 à 30N) et de la caractéristique (E) d'un ressort de réglage (0 à 10N). La caractéristique (D) peut être en elle même la somme de plusieurs ressorts en parallèle non représentés, deux le plus souvent, afin de satisfaire aux normes concernant la sécurité de fonctionnement des pédales. Si un actionneur de contrôle accroît la tension d'au moins un des ressorts et en particulier celle du ressort de réglage en éloignant le point d'ancrage de sa position initiale, la caractéristique (E) de force additionnelle zéro, va se déplacer parallèlement vers la caractéristique E1, de force additionnelle maxi, si bien que la caractéristique (F) va aussi se déplacer d'une valeur égale en tout point de la course vers la caractéristique F1. Le système se comporte donc comme un système à addition de force constante, avec une translation parallèle de la caractéristique de la pédale de (F) en (F1) sans augmentation de la pente initiale, depuis une force additionnelle nulle jusqu'à une force additionnelle maximum pour laquelle le ressort de réglage aura été dimensionné. On comprendra que le ressort de réglage peut avoir une précontrainte initiale sans conséquence sur les résultats. Il est donc possible de concevoir selon ces principes une pédale qui réponde aux réglementations relatives à la sécurité de fonctionnement des pédales, comprenant seulement deux ressorts dont un ressort de réglage. La nature des ressorts est sans influence sur l'application de ces principes et ils peuvent être de tout type connu, par exemple ressorts couple spiral ou en hélice, ressorts de traction ou de compression, de même que les différents ressorts peuvent être de nature différente.
Le point impératif de cette conception est que le ou les ressorts de réglage soient actifs sur toute la course de la pédale et qu'ils participent à la caractéristique initiale lorsque le système de réglage est en position de force additionnelle nulle. Cette conception est particulièrement adaptée aux pédales électroniques modernes, dite "drive by wire", dans lesquelles des ressorts de rappel sont déjà intégrés à la pédale. Elle permet de concevoir un ensemble pédale-actionneur d'une grande sécurité de fonctionnement qui répond aux attentes de l'industrie automobile en terme de coût, d'implantation et d'ergonomie.
Pour accroître la sensibilité du conducteur aux variations commandées de la force de rappel, il est préférable que le ou les ressorts de réglage n'aient pas d'action ou seulement une action limitée sur le dispositif d'hystérésis qui équipe généralement les pédales. L'actionneur qui déplace le point d'ancrage du ou des ressorts de réglage peut être un moteur ou un motoréducteur dont le mouvement de sortie est asservi en position selon des moyens connus, sous le contrôle d'une unité électronique qui reçoit les commandes déterminées par le logiciel spécifique à l'application. Afin d'améliorer le confort d'utilisation et de respecter les initiatives du conducteur, la force de rappel additionnelle peut être annulée rapidement en fonction de critères prédéterminés par le logiciel de l'application ou l'unité de contrôle, comme la détection d'une action de débrayage par le conducteur, la mise en service d'un clignotant, une volonté d'accélération rapide ou insistante de la part du conducteur, selon des choix non limitatifs programmés dans l'application. La volonté d'accélérer est détectée en appliquant le signal de position de la pédale à une fonction de dérivation suivie d'une fonction de seuil, de telle façon que la commande d'annulation rapide de la force de rappel additionnelle ne soit validée que si la pédale a eu simultanément une course et une vitesse de déplacement suffisantes. Ces fonctions peuvent être réalisée par l'unité électronique de contrôle de l'actionneur ou plus généralement au niveau du logiciel de l'application.
Le retour rapide est obtenu par la commande à pleine vitesse de l'actionneur de réglage vers la position de force additionnelle nulle. Il peut aussi résulter de l'action d'un système de désaccouplement commandé inséré entre le moteur de réglage et le point d'ancrage du ressort de telle façon que le point d'ancrage revienne de lui même en position de repos sous l'effet du ressort. Cette solution permet de réduire la vitesse nominale et donc la puissance de l'actionneur de réglage et elle peut aussi être utilisée pour une inhibition certaine du système en cas de défaillance.
Les figures jointes représentent :
Figure 1 : courbe caractéristique standard d'une pédale d'accélérateur.
Figure 2 : relation entre les sensations du conducteur et la force de rappel.
Figure 3 : contrôle de la force de rappel avec accroissement de la pente initiale.
Figure 4 : contrôle de la force de rappel à pente constante.
Figure 5 : contribution des effets de plusieurs ressorts à la caractéristique de la pédale.
Figure 6 : schéma représentatif de la fonction de détection des accélérations volontaires.
Figure 7 : représentation schématique d'un mode de réalisation de la pédale d'accélérateur à contrôle de force de rappel intégré.
Figure 8 : représentation schématique d'une variante de réalisation.

### Description d'un mode de réalisation préférentiel

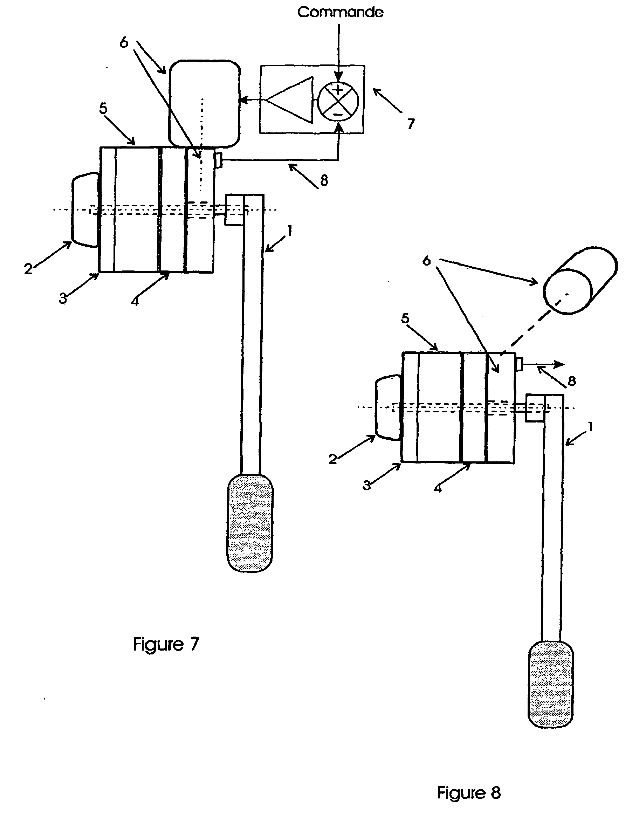

La description suivante illustre un mode de réalisation préférentiel mais non limitatif de la pédale d'accélérateur à contrôle de force de rappel intégré, en application des principes ci avant. Les dessins représentent une pédale de type pendulaire, mais les mêmes principes de réalisation s'appliquent évidemment au mécanisme d'une pédale articulée au sol.
La figure (7) donne une représentation schématique de la pédale d'accélérateur sous forme d'un assemblage linéaire de blocs de fonctions. Les détails de construction sont connus de l'homme de l'art et ils ne sont pas représentés pour la clarté de la représentation. La pédale comprend un bras de pédale d'accélérateur (1), un capteur de recopie de position (2), un dispositif d'hystérésis (3), des ressorts de rappel (4,5) comprenant le ressort de réglage (4), un moteur ou motoréducteur de réglage (6), commandé par une unité électronique (7).
Une extrémité des ressorts de rappel (4,5) est solidaire des déplacements du bras de pédale (1). Le ressort de rappel (5) peut être formé de un ou deux ressorts, dont les forces de réaction agissent sur le dispositif d'hystérésis (3). Le capteur de position, le dispositif d'hystérésis, le(s) ressort de rappel (5) sont conformes aux solutions connues en soi pour la construction de ce type de pédale. Il va de soi que le capteur de position pourrait être séparé du mécanisme de la pédale sans que les principes soient mis en cause.
Selon un mode de réalisation préférentiel, le ressort de rappel (4) utilisé comme ressort de réglage est un ressort couple, en hélice ou en spirale. Ce type de ressort favorise un encombrement réduit et il autorise une course active plus longue qui répond aux besoins du réglage. Il ne s'agit cependant que d'un exemple préférentiel et une variante de construction pourrait utiliser un ressort de réglage (4) de type traction ou compression, selon les principes de l'invention exposés ci avant. Contrairement au(x) ressort (5), ce ressort n'exerce pas d'action sur le dispositif d'hystérésis (3). Une extrémité du ressort (4) est solidaire des déplacements de la pédale et l'autre extrémité est fixée au mouvement de sortie du motoréducteur de réglage (6). Le moteur ou motoréducteur de réglage (6) est de préférence non réversible mécaniquement afin que la position de réglage soit maintenue sans consommation d'énergie. La figure 7 schématise un motoréducteur (6) de type vis sans fin qui est parmi d'autres une solution appropriée. L'extrémité du ressort (4) pourrait aussi être actionnée par un dispositif vis écrou tangent au ressort. Une réalisation selon la disposition de la figure 7 nécessite que l'axe de la pédale puisse tourner librement au centre du réducteur qui lui est concentrique. Il ne faut voir dans cette représentation qu'un exemple de réalisation. Le réducteur pourrait être de nature différente et/ou l'axe de la pédale pourrait tout aussi bien être sorti du coté opposé à l'ensemble. Sur un plan général l'homme de l'art est capable de concevoir, selon les principes de l'invention, l'intégration mécanique la plus adaptée à un encombrement et un coût minimums. La figure (8) représente une variante de construction dans laquelle le moteur ou motoréducteur (6) est éloigné de la pédale à laquelle un dispositif de liaison transmet le mouvement de réglage.
Un capteur transmet vers l'unité électronique de contrôle le signal (8) de la position du point d'ancrage du ressort (4). Le signal de position peut aussi résulter de la mesure du déplacement d'un élément mécanique intermédiaire, du contrôle direct d'un moteur pas à pas ou de tout autre système connu.
Selon une variante de réalisation non représentée, il existe dans la cinématique du système de réglage, entre le moteur et le point d'ancrage du ressort, un dispositif de désaccouplement commandé, par exemple de type billage, crabotage, embrayage, ou tout autre dispositif connu qui permet de libérer instantanément le point d'ancrage du ressort de réglage (4) de telle façon qu'il revienne de lui même à sa position initiale par l'application d'un signal de commande.
La détection de la volonté du conducteur d'accélérer est réalisée en appliquant le signal de la recopie de position de la pédale à une fonction de détection dont le principe est illustré par la figure 6 sous forme d'un schéma électronique de technologie analogique. Le signal de recopie de position de la pédale est appliqué à un circuit dérivateur RC qui délivre un signal représentatif à la fois de l'amplitude et de la vitesse de déplacement de la pédale. Ce signal est appliqué à un comparateur à seuil dont la sortie ne délivre un signal de commande que si l'amplitude et la vitesse de déplacement de la pédale sont suffisants. Un déplacement brusque de la pédale commande instantanément un retour rapide à la force nulle à condition que la course soit suffisante, typiquement quelques millimètres. Le retour peut aussi être commandé par un déplacement plus lent de la pédale, au delà d'une vitesse d'action minimum, à condition que ce déplacement soit insistant. Le délai de déclenchement dépend alors de la vitesse d'enfoncement. Les résultats de cette fonction sont très proches des besoins et des sensations de conduite du conducteur et beaucoup plus satisfaisants que le principe connu de "kick down" qui nécessite d'amener la pédale en fin de course pour déclencher une action. Le schéma analogique de la figure 7 est représentatif de la fonction réalisée et l'on comprendra qu'il peut être interprété dans le logiciel d'une unité de commande par une fonction de dérivation équivalente, de préférence filtrée, suivie d'une fonction de seuil.

Selon une variante de réalisation, le motoréducteur a un rapport de réduction particulièrement élevé et une vitesse lente du mouvement de sortie, ce qui autorise l'utilisation d'un moteur de très faible puissance. Cette variante de réalisation de coût réduit trouve une application particulière dans la réalisation d'une pédale d'accélérateur destinée à l'amélioration du confort de conduite par le réglage électrique d'une force de rappel personnalisée.

Cette invention trouve un usage privilégié comme Interface Homme Machine dans des applications d'aide à la conduite tels les limiteurs de vitesse, l'aide au respect des distances de sécurité inter véhicules, l'alerte anti-collision, et en général les assistances visant à améliorer le confort et la sécurité de la conduite. Elle peut participer à la réduction de la consommation ainsi qu'à l'accompagnement des décisions du conducteur dans le suivi d'une carte routière électronique.

## Revendications

1. Pédale d'accélérateur à contrôle de force de rappel intégré, comprenant un bras de pédale (1), un capteur de recopie de position (2), un dispositif d'hystérésis (3), des ressorts de rappel (4,5), un actionneur de réglage (6) commandé par une unité électronique (7) pouvant déplacer proportionnellement à une grandeur de commande issue d'un logiciel d'application le point d'ancrage d'au moins un des ressorts de rappel (4,5) utilisé en tant que ressort de réglage, **caractérisée en ce que** ledit ressort de réglage concourt en permanence et sans discontinuité à la caractéristique initiale de la pédale (1) sur toute la course de celle ci.

2. Pédale d'accélérateur à contrôle de force de rappel intégré selon la revendication 1, **caractérisée en ce que** à chaque position du point d'ancrage du ou des ressorts de réglage (4,5) correspond une force et un couple de rappel additionnels constants en tout point de la course, déterminant une translation de la caractéristique de pédale parallèle à la caractéristique d'origine entre une position de force additionnelle nulle et une position de force additionnelle maximum.

3. Pédale d'accélérateur à contrôle de force de rappel intégré selon les revendications 1et 2, **caractérisée en ce que** le ou les ressorts de réglage (4) n'ont pas d'action sur le dispositif d'hystérésis de la pédale (3) ou seulement une action limitée.

4. Pédale d'accélérateur à contrôle de force de rappel intégré selon l'ensemble des revendications précédentes **caractérisée en ce que** selon un mode de réalisation préférentiel le(s) ressort(s) de réglage (4) est un ressort couple de type spiral ou en hélice et **en ce que** l'actionneur de réglage (6) est un motoréducteur à vis sans fin ou un dispositif vis écrou tangent au ressort (4).

5. Pédale d'accélérateur à contrôle de force de rappel intégré selon l'ensemble des revendications précédentes, **caractérisée en ce que** le mouvement de l'actionneur (6) est non réversible mécaniquement et **en ce qu'**il existe entre l'actionneur et le point d'ancrage du ressort de réglage (4) un dispositif de désaccouplement commandé par lequel le point d'ancrage revient en position initiale.

6. Pédale d'accélérateur à contrôle de force de rappel intégré selon l'ensemble des revendications précédentes, **caractérisée en ce que** le moteur ou motoréducteur (6) peut être éloigné de la pédale (1) à laquelle il transmet le mouvement de réglage par un dispositif de liaison.

7. Pédale d'accélérateur à contrôle de force de rappel intégré selon l'ensemble des revendications précédentes, **caractérisée en ce que** l'unité électronique de contrôle (7) ou le logiciel d'application peuvent commander un retour rapide du réglage de la force de rappel en position nulle en fonction de critères prédéfinis comme une action de débrayage par le conducteur, la mise en service d'un clignotant, la détection de la volonté d'accélérer du conducteur.

8. Pédale d'accélérateur à contrôle de force de rappel intégré selon l'ensemble des revendications précédentes, **caractérisée en ce que** le retour rapide peut résulter de la commande à pleine vitesse de l'actionneur (6) ou de la commande du dispositif de désaccouplement commandé.

9. Pédale d'accélérateur à contrôle de force de rappel intégré selon l'ensemble des revendications précédentes, **caractérisée en ce que** la volonté d'accélérer du conducteur est détectée en appliquant le signal de recopie de position de la pédale (1) à une fonction de dérivation suivie d'une fonction de seuil de telle façon que le signal de retour rapide ne soit validé que si la pédale (1) a eu simultanément une course et une vitesse de déplacement suffisantes.

## Patentansprüche

1. Gaspedal mit integrierter Rückstellkraftkontrolle, das einen Pedalarm (1), einen Sensor (2) zur Lageerfassung, eine Hysteresevorrichtung (3), Rückstellfedern (4, 5), einen durch eine elektronische Einheit (7) betätigten Einstellbetätiger (6), der den Verankerungspunkt mindestens einer der Rückstellfedern (4, 5), die als Einstellfeder verwendet wird, proportional zu einer von einer Anwendungssoftware ausgegebenen Führungsgröße verschieben kann, umfasst, **dadurch gekennzeichnet, dass** die Einstellfeder über den ganzen Hub des Pedals (1) ständig und ununterbrochen zu seinem Anfangskennwert beiträgt.

2. Gaspedal mit integrierter Rückstellkraftkontrolle nach Anspruch 1, **dadurch gekennzeichnet, dass** jeder Position des Verankerungspunkts der Einstellfeder(n) (4, 5) eine zusätzliche Kraft und ein zusätzliches Rückstellmoment entspricht, die an jedem Punkt des Hubs konstant sind, wodurch eine Translationsbewegung des Pedalkennwerts bestimmt wird, die zum Ausgangskennwert zwischen einer zusätzlichen Kraftposition von Null und einer maximalen zusätzlichen Kraftposition parallel ist.

3. Gaspedal mit integrierter Rückstellkraftkontrolle nach Anspruch 1 und 2, **dadurch gekennzeichnet, dass** die Einstellfeder(n) 4 nicht oder nur begrenzt auf die Hysteresevorrichtung des Pedals (3) wirkt bzw. wirken.

4. Gaspedal mit integrierter Rückstellkraftkontrolle nach den vorhergehenden Ansprüchen, **dadurch gekennzeichnet, dass** gemäß einer bevorzugten Ausführungsform die Einstellfeder(n) (4) eine Drehmomentfeder der Spiral- oder Schraubenfederart ist (sind) und dass der Einstellbetätiger (6) ein Getriebemotor mit Schnecke oder eine tangential zur Feder (4) verlaufende Spindelvorrichtung ist.

5. Gaspedal mit integrierter Rückstellkraftkontrolle nach den vorhergehenden Ansprüchen, **dadurch gekennzeichnet, dass** die Bewegung des Betätigers (6) mechanisch nicht reversibel ist und dass zwischen dem Betätiger und dem Verankerungspunkt der Einstellfeder (4) eine gesteuerte Entkoppelvorrichtung vorgesehen ist, durch die der Verankerungspunkt in die Ausgangsstellung zurückkehrt.

6. Gaspedal mit integrierter Rückstellkraftkontrolle nach den vorhergehenden Ansprüchen, **dadurch gekennzeichnet, dass** der Motor oder der Getriebemotor (6) von dem Pedal (1) entfernt sein kann, auf das er die Einstellbewegung durch eine Verbindungsvorrichtung überträgt.

7. Gaspedal mit integrierter Rückstellkraftkontrolle nach den vorhergehenden Ansprüchen, **dadurch gekennzeichnet, dass** die elektronische Kontrolleinheit (7) oder die Anwendungssoftware in Abhängigkeit von vordefinierten Kriterien, wie zum Beispiel ein Ausrückvorgang durch den Fahrer, die Inbetriebnahme eines Blinkers, die Erfassung des Willens des Fahrers zu beschleunigen, eine schnelle Rückkehr der Einstellung der Rückstellkraft in die Nullposition bewirken kann.

8. Gaspedal mit integrierter Rückstellkraftkontrolle nach den vorhergehenden Ansprüchen, **dadurch gekennzeichnet, dass** die schnelle Rückkehr infolge des Befehls des Betätigers (6) bei voller Geschwindigkeit oder des Befehls der gesteuerten Entkopplungsvorrichtung erfolgen kann.

9. Gaspedal mit integrierter Rückstellkraftkontrolle nach den vorhergehenden Ansprüchen, **dadurch gekennzeichnet, dass** der Wille des Fahrers zu beschleunigen dadurch erfasst wird, dass das Positionserfassungssignal des Pedals (1) auf eine Ableitfunktion angewendet wird, an der sich eine Schwellfunktion anschließt, so dass das Signal der schnellen Rückkehr nur dann freigegeben wird, wenn das Pedal (1) gleichzeitig einen Hub und eine ausreichende Bewegungsgeschwindigkeit aufwies.

## Claims

1. An accelerator pedal with integrated return force control, with a pedal arm (1), a position recopy sensor (2), a hysteresis device (3), return springs (4, 5), and an adjustment actuator (6) controlled by an electronic unit (7), wherein the actuator (6) can move the anchor of at least one of the return springs (4, 5) used as adjusting spring in proportion with a variable of control from an application software, **characterized in that** said adjusting spring permanently and continuously contributes to the initial pedal (1) features all over the pedal stroke.

2. An accelerator pedal with integrated return force control according to claim 1, **characterized in that** an additional force and an additional restoring torque correspond to each anchor position of the adjusting spring(s) (4, 5), wherein the additional force and the additional restoring torque remain constant at any stroke point and determine a translation of the pedal feature parallel to the initial features between a zero additional force position and a maximum additional force position.

3. An accelerator pedal with integrated return force control according to claims 1 and 2, **characterized in that** the adjusting spring(s) (4) have no influence on the pedal hysteresis device (3) or only a limited one.

4. An accelerator pedal with integrated return force control according to all previous claims, **characterized in that** according to a preferred embodiment the adjusting spring(s) (4) is/are a spiral type torque spring and that the adjustment actuator (6) is a worn geared motor or a screw-nut device tangent to the spring (4).

5. An accelerator pedal with integrated return force control according to all previous claims, **characterized in that** the actuator (6) movement is mechanically non reversible and that between the actuator and the anchor of the adjusting spring (4) there is a controlled uncoupling device that brings the anchor back to its initial position.

6. An accelerator pedal with integrated return force control according to all previous claims, **characterized in that** the motor or the geared motor (6) can be placed away from the pedal (1) to which it transfers the adjustment movement using a link device.

7. An accelerator pedal with integrated return force control according to all previous claims, **characterized in that** the electronic control unit (7) or the application software can control a quick reset of the return force control in neutral position according to predetermined characteristics such as a declutching by the driver, the activation of a turn signal, the detection of the driver's will to speed up.

8. An accelerator pedal with integrated return force control according to all previous claims, **characterized in that** the quick reset can come from the actuator full speed command (6) or from the controlled uncoupling device command.

9. An accelerator pedal with integrated return force control according to all previous claims, **characterized in that** the driver's will to speed up is detected by applying the pedal position recopy signal (1) to a derivative function followed by a threshold function so that the quick reset is accepted only if the pedal (1) has simultaneously received enough stroke and quick movement.
